# EUROPEAN PATENT SPECIFICATION

(11) **EP 1 635 095 B1**
(45) Date of publication and mention of the grant of the patent: **14.11.2007**
(21) Application number: 04745585.2
(22) Date of filing: 04.06.2004
(51) Int. Cl.: F16K 15/20

(54) **VALVE FOR SAFETY TIRE AND PRESSURE-RELEASING ADAPTER**
VENTIL FÜR SICHERHEITSREIFEN UND DRUCKABLASSADAPTER
VALVE POUR PNEUMATIQUE DE SECURITE ET ADAPTATEUR DE DEGONFLAGE

(30) Priority: 05.06.2003 JP 2003161408
(43) Date of publication of application: 15.03.2006
(73) Proprietor: Bridgestone Corporation, Tokyo 104-8340 (JP); Pacific Industrial Co., Ltd., Ogaki-shi, Gifu-ken 503-8603 (JP)
(72) Inventor: MATSUZAWA, Kazutaka, c/o BRIDGEST0NE CORPORATION, Tokyo 1048340 (JP); YAMAMOTO, Masahiko, c/o PACIFIC INDUSTRIAL CO. LTD, Ogaki-shi, Gifu 5038603 (JP)
(74) Representative: Whalley, Kevin
(86) International application number: PCT/JP2004/007809
(87) International publication number: WO 2004/109168

(56) References cited:
- JP-A- 2001 519 873
- JP-A- 2002 340 206
- JP-A- 2003 028 329
- JP-U- 49 068 104
- JP-U- 55 085 908
- JP-U- 59 144 269
- JP-Y2- 51 025 282
- JP-Y2- 52 003 203
- JP-Y2- 60 002 381
- US-A- 2 354 912
- US-A- 5 538 061
- US-B1- 6 354 348
- PATENT ABSTRACTS OF JAPAN vol. 2003, no. 05, 12 May 2003 (2003-05-12) & JP 2003 028329 A (BRIDGESTONE CORP; PACIFIC IND CO LTD), 29 January 2003 (2003-01-29)
- PATENT ABSTRACTS OF JAPAN vol. 2003, no. 03, 5 May 2003 (2003-05-05) & JP 2002 340206 A (PACIFIC IND CO LTD; BRIDGESTONE CORP), 27 November 2002 (2002-11-27)

## Description

### TECHNICAL FIELD

The present invention relates to a valve for a safety tire and a pressure releasing adapter. More specifically, the present invention relates to a valve for a safety tire for charging air into an outer gas chamber and an inner gas chamber, which are provided in a tire having a double structure; a filling adapter with a coupler that is used for charging gas into the safety tire having a double structure, which is equipped with the valve for a safety tire; a pressure releasing adapter for causing gas of the safety tire having a double structure, which is equipped with the valve for a safety tire, to be released to the atmosphere; and a pressure releasing method for causing gas of the safety tire having a double structure, which is equipped with the valve for a safety tire, to be released to the atmosphere.

### BACKGROUND ART

In a common tire having a double structure, a tube (an inner gas chamber) charged with high pressure gas is disposed within the tire. In case of puncture of the tire, the tube expands so that the tire can be supported by the tube from the inner surface side thereof.

As a conventional valve for a safety tire having a double structure, for example, the patent document 1 listed below discloses a valve which can supply gas from one gas supply port into an inner gas chamber and an outer gas chamber (between the tube and the tire).

However, in the above-described conventional valve for a safety tire, although gas supplied from one gas supply port is supplied into the inner gas chamber and the outer gas chamber, when gas in the inner gas chamber and gas in the outer gas chamber are removed, gas is adapted to be removed from a gas discharge opening of the inner gas chamber and a gas discharge opening of the outer gas chamber, which are provided in addition to the gas supply port.

Moreover, the gas discharge opening of the inner gas chamber and the gas discharge opening of the outer gas chamber are closed by a common cap member. Therefore, when the cap member is removed, gas supplied into the inner gas chamber and gas supplied into the outer gas chamber are discharged simultaneously, and only any one of the gas supplied into the inner gas chamber and the gas supplied into the outer gas chamber cannot be released. Accordingly, the internal pressures of these gas chambers cannot be individually adjusted, for example, by discharging gas from each gas chamber.
Patent document 1: US 6354348

### DISCLOSURE OF THE INVENTION

### Problems to be solved by the Invention

It is a first object of the invention to solve the above-described problems and provide a valve for a safety tire, which makes it possible to supply gas into an inner gas chamber and an outer gas chamber, separately, of a tire having a double structure, facilitate a charging operation, and remove gas supplied into the inner gas chamber and gas supplied into the outer gas chamber individually.

A second object of the invention is to provide a filling adapter with a coupler, which makes it possible to easily cause pressure difference between an inner gas chamber and an outer gas chamber of a tire having a double structure.

A third object of the invention is to provide a pressure releasing adapter that makes it possible to cause gas within the inner gas chamber and gas within the outer gas chamber to be easily released to the atmosphere, so as to prevent a gas pocket of a tire having a double structure from expanding.

Further, a fourth object of the invention is to provide a pressure releasing method which allows gas within the inner gas chamber and gas within the outer gas chamber to be easily released to the open air, so as to prevent a gas pocket of a tire having a double structure from expanding.

### Means for solving the Problems

The invention as defined in claim 1 is a valve for a safety tire, equipped with a charging opening for charging gas into an outer gas chamber and an inner gas chamber, which are provided in a tire having a double structure, the valve for a safety tire comprising: an air-supply passage for an inner gas chamber, which causes the charging opening and the inner gas chamber to communicate with each other; an air-supply passage for an outer gas chamber, which causes the charging opening and the outer gas chamber to communicate with each other; a nonreturn valve member for an inner gas chamber, provided in the air-supply passage for an inner gas chamber, the nonreturn valve member for an inner gas chamber allowing gas to flow from the atmospheric side into the gas chamber and making it possible to prevent gas from flowing from the gas chamber into the atmosphere, and also allowing gas to flow from the gas chamber into the atmosphere by carrying out a predetermined operation; and a nonreturn valve member for an outer gas chamber, provided in the air-supply passage for an outer gas chamber, the nonreturn valve member for an outer gas chamber allowing gas to flow from the atmospheric side into the gas chamber and making it possible to prevent gas from flowing from the gas chamber into the atmosphere, and also allowing gas to flow from the gas chamber into the atmosphere by carrying out a predetermined operation.

Next, the operation of the valve for a safety tire as defined in claim 1 will be described.

According to the valve for a safety tire as defined in claim 1, when gas is charged from the charging opening, the charged gas is supplied via the air-supply passage for an inner gas chamber to the inner gas chamber, and is also supplied to the outer gas chamber via the air-supply passage for an outer gas chamber.

The gas in the outer gas chamber is prevented from being released to the atmosphere by the nonreturn valve member for an outer gas chamber, and the gas in the inner gas chamber is prevented from being released to the atmosphere by the nonreturn valve member for an inner gas chamber.

As a result, when the gas in the outer gas chamber is discharged, for example, in case of puncture of a safety tire having a double structure, run-flat running becomes possible by expanding an air pocket (a tube or the like) in the tire for example.

The gas in the outer gas chamber can be released to the atmosphere by operating the nonreturn valve member for an outer gas chamber, and the gas in the inner gas chamber can be released to the atmosphere by operating the nonreturn valve member for an inner gas chamber.

The invention as defined in claim 1 is characterized in that, detachment-restraining means for restraining-detachment of the nonreturn valve member for an outer gas chamber is provided in the air-supply passage for an outer gas chamber at a position nearer to the charging opening than the nonreturn valve member for an outer gas chamber.

Next, the operation of the valve for a safety tire as defined in claim 1 will be described.

In the valve for a safety tire as defined in claim 1, the detachment-restraining means prevents removal of the nonreturn valve member for an outer gas chamber. As a result, when the nonreturn valve member for an inner gas chamber and the nonreturn valve member for an outer gas chamber are both removed, the nonreturn valve member for an inner gas chamber can be removed in advance.

The valve further comprises an engaging portion that allows a filling adapter with a coupler, which supplies gas by engaging with the charging opening so as to make a pressure difference between the air-supply passage for an inner gas chamber and the air-supply passage for an outer gas chamber, to be mounted at the charging opening in only a fixed direction.

When a filling adapter with a coupler, which is adapted to make a pressure difference between the air-supply passage for an inner gas chamber and the air-supply for an outer gas chamber, is engaged with the charging opening, the engaging portion allows the filling adapter with a coupler to be mounted at the charging opening in a fixed direction only.

As a result, for example, in a case in which the pressure in the air-supply passage for an inner gas chamber must be set at a high rate and the pressure in the air-supply passage for an outer gas chamber must be set at a low rate, gas can be constantly supplied so as to constantly make a specified pressure difference, and it is possible to prevent the pressures in these air-supply passages from being accidentally set inversely.

A filling adapter with a coupler, for charging gas from a gas supply source into an outer gas chamber and an inner gas chamber of a tire having a double structure comprises: a main body portion engaging with the valve, and differential pressure setting means provided in the main body portion and distributing gas from the gas supply source to the air-supply passage for an inner gas chamber and the air-supply passage for an outer gas chamber so as to generate a pressure difference therebetween.

Next, the operation of the filling adapter with a coupler will be described.

When gas from the gas supply source is charged into the outer gas chamber and into the inner gas chamber, the main body portion of the filling adapter with a coupler is engaged with the valve for a safety tire.

When gas is supplied from the gas supply source, the differential pressure setting means is provided so as to distribute gas from the gas supply source to the air-supply passage for an inner gas chamber and the air-supply passage for an outer gas chamber so as to generate a pressure difference therebetween.

To this end, the pressure difference can be made between the outer gas chamber and the inner gas chamber of a tire having a double structure.

In the tire having a double structure that allows run-flat running, usually, the gas pressure of the inner gas chamber formed by a tube or the like is set so as to be higher than that of the outer gas chamber, and for example, in case of puncture of the tire, the tube is inflated.

Accordingly, by using the filling adapter with a coupler according to the present invention, for example, it is possible to easily set the gas pressure of the inner gas chamber higher than that of the outer gas chamber.

The invention as defined in claim 2 is a pressure releasing adapter used in a safety tire-rim assembly equipped with a pneumatic tire, an expandable air pocket provided within the pneumatic tire and forming an inner gas chamber, a rim which forms an outer gas chamber between the pneumatic tire and the air pocket when the pneumatic tire and the air pocket are mounted, and the valve for a safety tire as defined in claim 1; the pressure releasing adapter being used to release gas both in the inner gas chamber and in the outer gas chamber to the atmosphere, and comprising: a main body portion that can engage with the valve for a safety tire; and operating means provided in the main body portion and causing gas in the inner gas chamber and gas in the outer gas chamber to be released to the atmosphere so as not to expand the air pocket, by carrying out a predetermined operation with respect to the nonreturn valve member for an inner gas chamber and the nonreturn valve member for an outer gas chamber of the valve for a safety tire when the main body portion is engaged with the valve for a safety tire.

Next, the operation of the pressure releasing adapter as defined in claim 2 will be described.

When gas in the inner gas chamber and gas in the outer gas chamber are released to the atmosphere, the main body portion of the pressure releasing adapter is engaged with the valve for a safety tire.

As a result, a predetermined operation is carried out by the operating means for the nonreturn valve member for an inner gas chamber and the nonreturn valve member for an outer gas chamber, and the gas in the inner gas chamber and the gas in the outer gas chamber are released to the atmosphere without expanding the air pocket.

In the tire having a double structure that allows run-flat running, usually, the air pocket (a tube or the like) that forms the inner gas chamber is not reused after having been expanded once (for example, after the air pocket has been expanded into or more than a predetermined size within the tire).

Accordingly, for example, in a case in which gas is released at the time of changing a tire, or the like, the tube or the like which forms the inner gas chamber becomes unusable if it is expanded.

When the pressure releasing adapter of the present invention is used, gas in the inner gas chamber and gas in the outer gas chamber both can be easily released without inflating the air pocket.

The nonreturn valve member for an inner gas chamber is removed in advance of the nonreturn valve member for an outer gas chamber. Therefore, the gas in the inner gas chamber can be released in advance of the gas in the outer gas chamber.

The pressure releasing adapter includes operating means which operates the nonreturn valve member for an inner gas chamber in advance of the nonreturn valve member for an outer gas chamber.

In order to release the gas in the inner gas chamber and the gas in the outer gas chamber to the atmosphere, the pressure releasing adapter is engaged with the valve for a safety tire.

The operating means of the pressure releasing adapter is provided so as to operate the nonreturn valve member for an inner gas chamber in advance of the nonreturn valve member for an outer gas chamber. Therefore, the gas in the inner gas chamber can be released to the atmosphere in advance of the gas in the outer gas chamber.

The invention as defined in claim 3 is the pressure releasing adapter as defined in claim 2, wherein the operating means includes a first protruding portion for operating the nonreturn valve member for an inner gas chamber, and a second protruding portion for operating the nonreturn valve member for an outer gas chamber, and the first protruding portion is longer than the second protruding portion.

The first protruding portion for operating the nonreturn valve member for an inner gas chamber is longer than the second protruding portion for operating the nonreturn valve member for an outer gas chamber. Therefore, when the pressure releasing adapter is mounted at the valve for a safety tire, the nonreturn valve member for an inner gas chamber can be operated in advance to allow the gas in the inner gas chamber to be released in advance.

### Effects of the Invention

The valve for a safety tire as defined in claim 1 has the above-described structure, and therefore, it has an excellent effect that when used in a tire-rim assembly having a double structure, the inner gas chamber and the outer gas chamber can be separately charged with gas at different gas pressures, and the charging operation can be easily carried out.

The valve has an excellent effect that the nonreturn valve member for an inner gas chamber can be removed in advance so that expansion of the air pocket that forms the inner gas chamber can be prevented for example.

Gas can be supplied so as to make a specified pressure difference between the air-supply passage for an inner gas chamber, and the air-supply passage for an outer gas chamber.

The filling adapter with a coupler has an excellent effect that it is possible to easily make a pressure difference between the outer gas chamber and the inner gas chamber of the tire having a double structure.

The pressure releasing adapter as defined in claim 2 has an excellent effect that it is possible to easily release the gas of the inner gas chamber and the gas of the outer gas chamber without expanding the air pocket.

The gas in the inner gas chamber can be released in advance of the gas in the outer gas chamber, thereby making it possible to prevent expansion of the air pocket.

The gas in the inner gas chamber can be released in advance by means of a simple structure.

### BRIEF DESCRIPTION OF THE DRAWINGS

Fig. 1 is a cross-sectional view of a tire-rim assembly having a double structure.
Fig. 2 is a cross-sectional view of a valve.
Fig. 3 is a cross-sectional view showing a state in which a valve core is closed.
Fig. 4 is a cross-sectional view showing a state in which a valve core is opened.
Fig. 5 is a perspective view of a detachment-restraining adapter.
Fig. 6 is a cross-sectional view of a filling adapter with a coupler.
Fig. 7 is a perspective view of a valve-core pressing member.
Fig. 8 is a perspective view of a valve body.
Fig. 9 is a perspective view of a stopper.
Fig. 10 is a top view of a valve.
Fig. 11 is a cross-sectional view of a valve in which a filling adapter with a coupler is mounted.
Fig. 12 a cross-sectional view of a valve in which a pressure releasing adapter is mounted.
Fig. 13 is a cross-sectional view of a valve at which a cap is mounted.
Fig. 14 is a cross-sectional view of a valve in which a filling adapter with a coupler according to a second embodiment of the invention is mounted.
Fig. 15 is a cross-sectional view of a valve in which a filling adapter with a coupler according to a third embodiment of the invention is mounted.

### BEST MODES FOR CARRYING OUT THE INVENTION

### [First Embodiment]

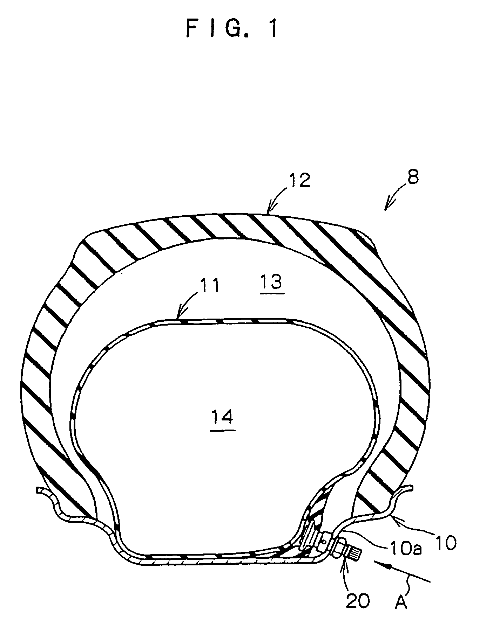

A first embodiment of the present invention will be hereinafter described based on Fig. 1 through Fig. 15.

### (Structure of tire-rim assembly)

Fig. 1 shows a cross section of a tire-rim assembly 8 having a double structure in which a valve for a safety tire according to this embodiment is mounted.

The tire-rim assembly 8 having a double structure is formed in such a manner that a space is provided between a tube 11 engaged with an outer peripheral surface of a rim 10 for a vehicle wheel, and a tire 12 that covers the outer periphery of the tube 11, and a pair of inner peripheral edges of the tire are brought into closely contact with the rim 10.

Thus, in the interior of an outer gas chamber 13 closed by the rim 10 and the tire 12, an inner gas chamber 14 closed by the tube 11 is formed.

### (Structure of valve)

An intermediate portion of the outer peripheral surface of the rim 10 in the transverse direction (in the horizontal direction in Fig. 1), with the tube 11 being engaged therein, is depressed in a stepwise manner. A valve 20 for a safety tire (hereinafter referred to simply as "valve 20") according to the present invention is mounted in a through hole 10b formed in a stepped portion 10a of the rim 10.

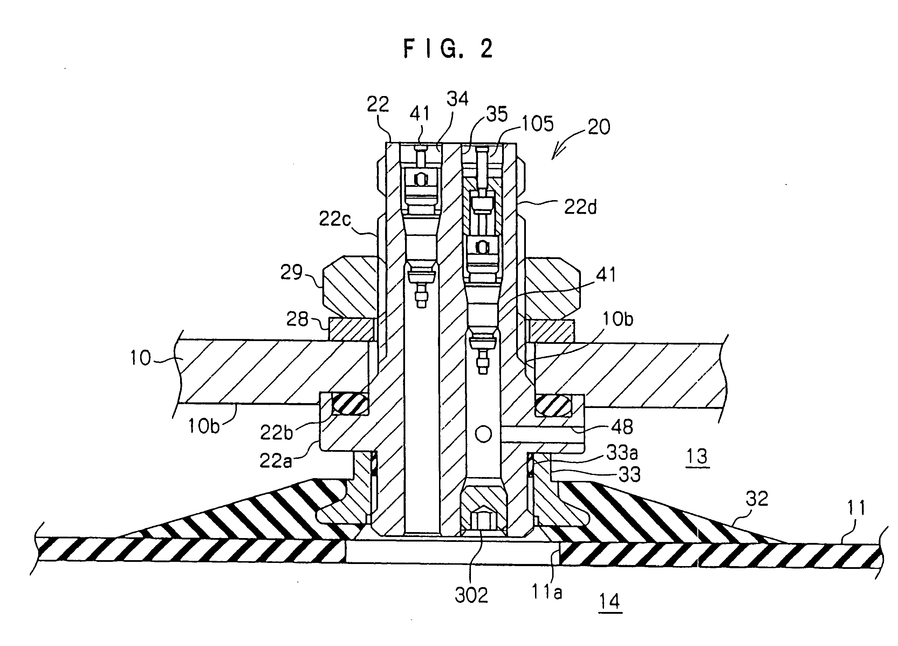

As shown in Fig. 2, the valve 20 is provided with a first hollow stem 22 that forms a main body portion thereof.

The first hollow stem 22 is inserted into the through hole 10b of the rim 10 from the inside, that is, from the side of the outer gas chamber 13.

A flange 22a formed in the first hollow stem 22 is made to abut against a portion near a peripheral edge of the through hole 10b of the rim 10. A nut 29 is screwed onto a male screw 22c formed on the outer peripheral surface of the first hollow stem 22 by inserting a washer 28 and the nut 29 from the outside of the rim 10 (from the atmospheric side). In this way, the first hollow stem 22 is secured to the rim 10.

An O-ring 22b is disposed in the flange 22a of the first hollow stem 22 so that gas tightness between the first hollow stem 22 and the rim 10 is ensured.

A metal ring 33 is screwed onto the outer peripheral surface of the first hollow stem 22 at the side of the basal end thereof.

Incidentally, due to an O-ring 33a disposed between the first hollow stem 22 and the metal ring 33, gas tightness between the first hollow stem 22 and the metal ring 33 is ensured.

Spats (rubber seat) 32 overhanging outward in the radial direction are secured to the outer periphery of the metal ring 33.

The spats 32 have a circular configuration and the thickness thereof gradually becomes smaller from the center to the periphery.

The spats 32 are secured, with an adhesive, at a peripheral edge of a hole portion 11a formed in the tube 11.

As a result, the basal end of the first hollow stem 22 is brought into a state of facing the interior of the inner air chamber 14.

A hole 34 and a hole 35 are formed in the first hollow stem 22 along the shaft center thereof so as to pass in the axial direction.

A valve core 41 is disposed in the hole 34 in the vicinity of an end thereof on the opposite side of the tire.

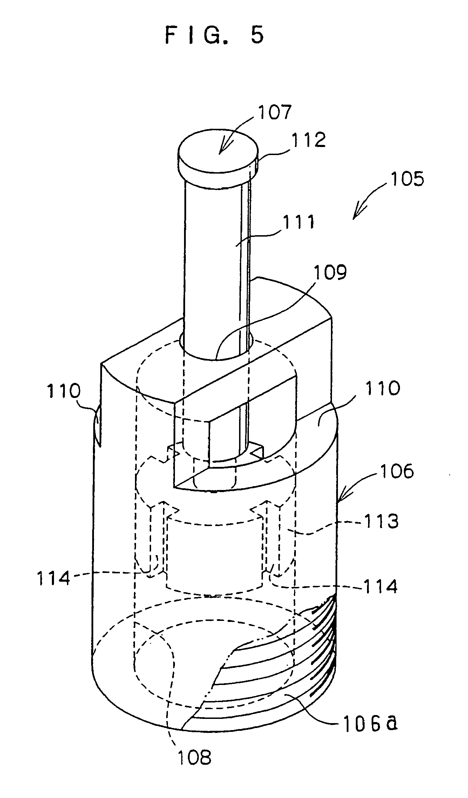

A detachment-restraining adapter 105 shown in Fig. 5 is screwed into the hole 35 in the vicinity of an end thereof on the opposite side of the tire. The valve core 41 is disposed in the detachment-restraining adapter 105 on the side of the tire. 72 The opening of the hole 35 on the side of the tire is closed by a set screw 302.

### (Valve core)

The valve core 41 seals hermitically communication between the inner gas chamber 14 and the outside of the tire in openable and closable manner.

The valve core 41 will be hereinafter described in detail.

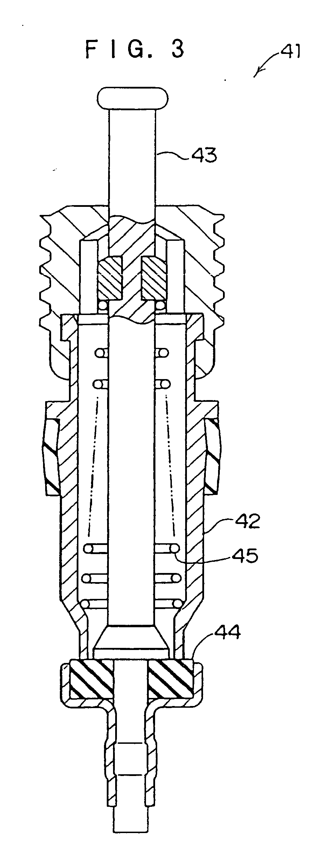

The valve core 41 of the present embodiment has a general structure according to JIS D 4211 (JIS: Japanese Industrial Standard). That is, as shown in Fig. 3, a flange-shaped valve packing 44 is fixed at one end of a shaft 43 passing through a sleeve (trunk) 42, and the shaft 43 is urged toward one side by a coil spring 45 accommodated in the sleeve 42. As a result, the valve packing 44 is usually pressed against one end opening of the sleeve 42.

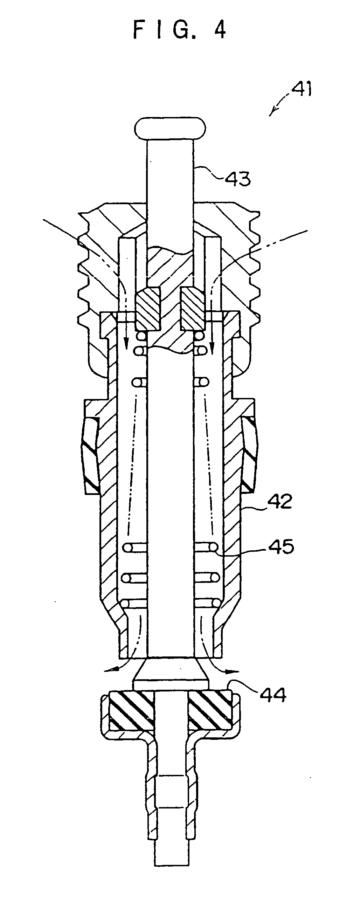

When gas is charged to the shaft 43 from a side opposite to the valve packing 44, the shaft 43 moves against the coil spring 45 due to air pressure applied to the end surface of the shaft 43. As shown in Fig. 4, the valve packing 44 is separated from the sleeve 42 and gas passes through the sleeve 42 as indicated by arrows of two-dot chain lines in Fig. 4.

Compressed gas from a side of the valve packing 44 causes the valve packing 44 to be pressed against one end opening of the sleeve 42, and therefore, the compressed gas cannot pass through the sleeve 42.

In other words, the valve core 41 has a nonreturn valve structure and allows gas to flow into the tire, but can prevent gas from flowing out from the tire.

Accordingly, in the state shown in Fig. 2, gas in the inner gas chamber 14 is prevented by the valve core 41 from flowing out from the tire.

As shown in Fig. 2, the flange 22a of the first hollow stem 22 includes a narrow hole 48 whose one end is opened to the outer periphery and whose another end is opened to the hole 35.

Accordingly, the outer gas chamber 13 is connected to the hole 35 via the narrow hole 48.

As described above, the valve core 41 is provided at the intermediate portion of the hole 35. Therefore, in the state shown in Fig. 2, flowing of gas in the outer gas chamber 13 to the outside of the tire is prevented.

### (Detachment-restraining adapter)

As shown in Fig. 5, a detachment-restraining adapter 105 is equipped with a cylindrical main body 106 and a slide shaft 107.

The main body 106 includes, in the axial center thereof, a large-diameter hole 108 that is formed from the lower end thereof to a position near the upper end thereof. Formed in the bottom portion of the large-diameter hole 108 is a small-diameter through hole 109.

Further, a notch 110 is formed partially at the upper end of the main body 106. As a result, a portion of the large-diameter hole 108 is exposed to the outer periphery of the main body 106.

Moreover, a male screw 106a (partially shown) is formed entirely on the outer peripheral surface of the main body 106.

A main body shaft portion 111 of a slide shaft 107 is slidably inserted in the through hole 109 of the main body 106.

A first stopper 112 of which diameter is slightly larger than that of the through hole 109 is formed at the upper end of the main body shaft portion 111, and a second stopper 113 of which diameter is slightly smaller than that of the large-diameter hole 108 is formed at the lower end of the main body shaft portion 111.

A plurality of grooves 114 are formed on the outer peripheral surface of the second stopper 113 so as to extend along the axial direction thereof.

### (Structure of a filling adapter with a coupler)

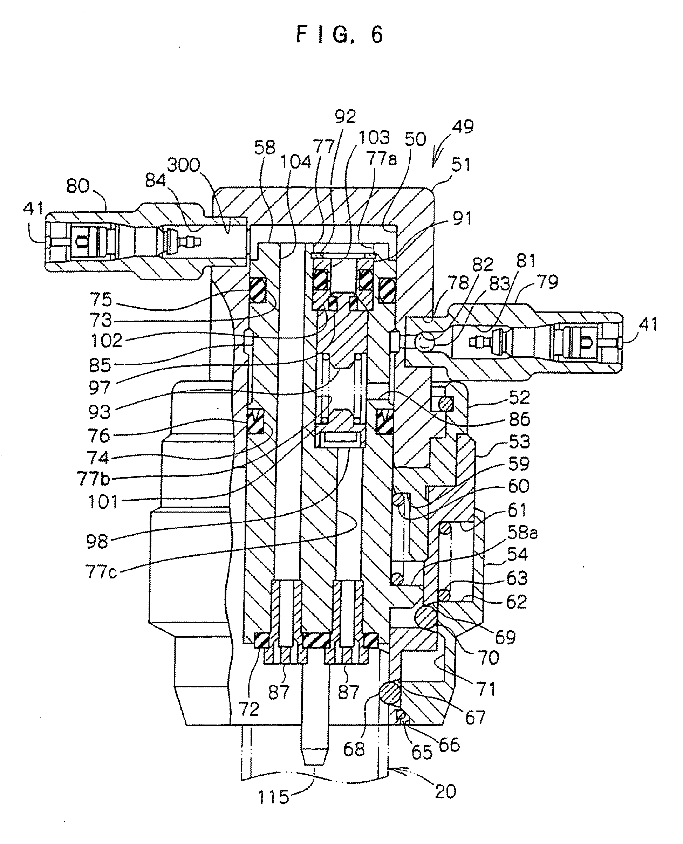

When gas is filled using the valve 20 of the present embodiment, a special filling adapter 49 with a coupler, which is shown in Fig. 6, is used.

As shown in Fig. 6, the filling adapter 49 with a coupler includes a main body 51 in which a large-diameter circular hole 50 is formed so as to extend from the lower side to the upper side in Fig. 6.

A first cylindrical member 52 is disposed on the outer periphery of the main body 51 in the lower side thereof in Fig. 6. A second cylindrical member 53 is disposed at an outer side of the first cylindrical member 52 and a slide ring 54 is disposed at an outer side of the second cylindrical member 53.

The main body 51 and the first cylindrical member 52 are connected in a detachable manner by engaging a C-ring 57 with a groove 55 formed on the inner side of the first cylindrical member 52 at the upper side thereof in Fig. 6, and a stepped portion 56 formed on the outer periphery of the main body 51.

A piston 58 is inserted in the circular hole 50 of the main body 51 so as to be relatively rotatable and slidable in the axial direction.

A compression coil spring 60 is disposed between a flange 58a of the piston 58 and a stepped portion 59 formed on the inner periphery of the first cylindrical member 52, so as to urge the piston 58 toward the lower side in Fig. 6. 93 A compression coil spring 63 is disposed between a stepped portion 61 formed on the outer periphery of the second cylindrical member 53, and a stepped portion 62 formed on the inner periphery of the slide ring 54, so as to urge the slide ring 54 toward the lower side in Fig. 6.

A groove is formed on the outer peripheral surface of the first cylindrical member 52 in the vicinity of the lower end thereof, and a C-ring 65 is fitted in the groove.

Further, a diameter-enlarged portion 66 is formed on the inner peripheral surface of the slide ring 54 at a lower-end opening portion thereof. The slide ring 54 urged by the compression coil spring 63 is restrained from moving to the lower side of Fig. 6, with the diameter-enlarged portion 66 abutting against the C ring 65 of the second cylindrical member 53.

A tapered bore 67 is formed in the second cylindrical member 53 at the upper side of the C-ring 65 in Fig. 6.

The diameter of the tapered bore 67 increases from inside to outside, and a hard ball 68 is inserted into the tapered bore 67.

In the state shown in Fig. 6, the hard ball 68 abuts against the inner peripheral surface of the slide ring 54, and a portion of the hard ball 68 protrudes out toward the inner peripheral surface of the second cylindrical member 53.

When the slide ring 54 slides to the upper side of Fig. 6 and the hard ball 68 is made to face the diameter-enlarged portion 66 of the slide ring 54, the hard ball 68 can be moved outside so as not to protrude from the inner peripheral surface of the second cylindrical member 53.

Further, a tapered bore 69 is formed in the second cylindrical member 53 at the upper side of the tapered bore 67 in Fig. 6.

The diameter of the tapered bore 69 increases from inside to outside, and a hard ball 70 is inserted in the tapered bore 69.

A diameter-enlarged portion 71 is formed on the inner peripheral surface of the second cylindrical member 53 further at the lower side than the hard ball 70 in Fig. 6.

When the slide ring 54 slides toward the upper side of Fig. 6 and the hard ball 70 is made to face the diameter-enlarged portion 71 of the slide ring 54, the hard ball 70 can be moved outside so as not to protrude from the inner peripheral surface of the second cylindrical member 53.

A packing 72 is fixed to an end surface of the piston 58 at the lower side of Fig. 6.

The lower surface of the packing 72 can be made to abut against the upper end surface of the first hollow stem 22 of the valve 20.

A pair of grooves 73, 74 are formed on the outer peripheral surface of the piston 58. An O-ring 75 is fitted in the upper groove 73 and a piston ring 76 made of an elastic body is fitted in the lower groove 74. These rings each provide sealing between the outer peripheral surface of the piston 58 and the inner peripheral surface of the circular hole 50.

A hole 77 is formed on the side surface of the main body 51 at the upper side thereof in Fig. 6, and a hole 78 is formed at the lower side of the hole 77 in Fig. 6.

A first coupling 79 that is used for measuring an internal pressure is fixed to the hole 78, and a second coupling 80 that is used for filling gas is fixed to the hole 77.

A through hole 81 is formed in an axial center of the first coupling 79, and a valve core 41 is fixed to the through hole 81.

The through hole 81 includes a stepped portion 82 of which hole diameter gradually becomes smaller as it approaches the main body, and a spherical valve body 83 made of an elastic body is disposed between the stepped portion 82 and the valve core 41.

The spherical valve body 83 abuts against the stepped portion 82 when gas is about to be filled from the side of the valve core 41. Thus, the spherical valve body 83 serves to prevent gas from flowing into the main body 51.

Next, a through hole 84 is formed in an axial center of the second coupling 80, and the valve core 41 is fixed to the through hole 84.

An annular shallow groove 85 is formed on the outer peripheral surface of the piston 58 between the O-ring 64 and the piston ring 76.

The hole 78 of the main body 51, in which the first coupling 79 is mounted, faces the shallow groove 85 of the piston 58.

The piston 58 includes a through hole 104 and the through hole 77, which holes are formed along the axial center thereof.

The through hole 77 is formed by a large-diameter portion 77a at the uppermost position in Fig. 6, an intermediate-diameter portion 77b located below the large-diameter portion 77a, and a small-diameter portion 77c located below the intermediate-diameter portion 77b.

Incidentally, a hole 86 is formed at an intermediate portion of the piston 58 in the longitudinal direction thereof, so as to connect the bottom of the shallow groove 85 and the intermediate-diameter portion 77b of the through hole 77.

Valve core pressing members 87 are screwed into the end of the through hole 104 at the lower side of Fig. 6 and into the end of the through hole 77 at the lower side of Fig. 6, respectively.

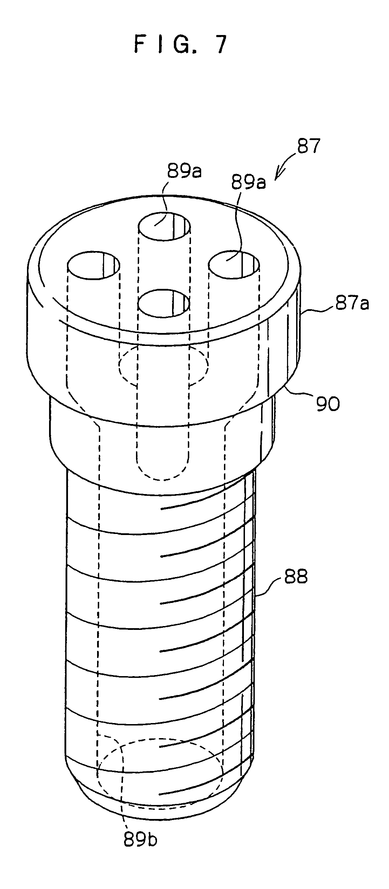

As shown in Fig. 7, a male screw 88 is formed substantially on the entire peripheral surface of the valve-core pressing member 87 other than the large-diameter portion 87a provided at one end of the valve-core pressing member 87.

A plurality of small holes 89a extending along the axial direction are formed in the large-diameter portion 87a so as to be arranged circumferentially in a portion of the large-diameter portion 87a other than the axial core portion.

A hole 89b is formed in the axial center of the valve-core pressing member 87 so as to extend from an end thereof opposite to the large-diameter portion 87a to the large-diameter portion 87a. The end of the hole 89b is connected to the above-described plural small holes 89a within the valve-core pressing member 87. 122 A stepped portion 90 is formed in the large-diameter portion 87a. A portion of the packing 72 is caught by the stepped portion 90, thereby preventing the packing 72 from falling off from the lower end portion of the piston.

A cylindrical stopper 91 is inserted in the large-diameter portion 77a of the through hole 75 of the piston 58, and is fixed by a C- ring 92.

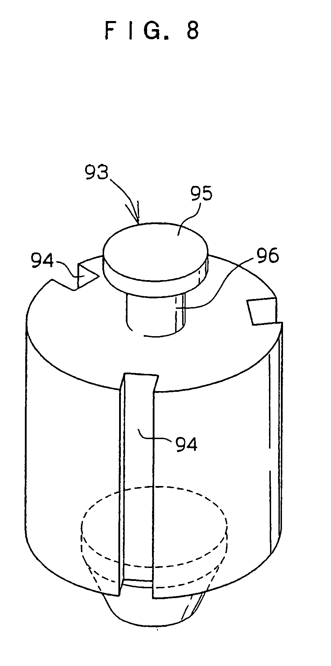

A valve body 93 shown in Fig. 8 is inserted in the intermediate-diameter portion of the through hole 77 in a slidable manner.

As shown in Fig. 8, the valve body 93 includes a plurality of grooves 94 extending along the axial direction to flow gas on the outer peripheral surface thereof, and an O-ring 97 (not shown in Fig. 8, but shown in Fig. 6) is fitted in a groove 96 of a small-diameter shaft portion 95 provided at the end of the valve body 93.

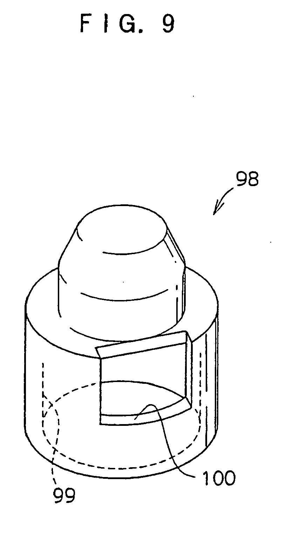

Further, a stopper 98 shown in Fig. 9 is disposed in the intermediate-diameter portion 77b at the lower end of the valve body 93 shown in Fig. 8.

As shown in Fig. 9, the stopper 98 includes a concave portion 99 and a notch 100 so as to allow gas to flow in the axial direction.

As shown in Fig. 6, a compression coil spring 101 is disposed between the stopper 98 and the valve body 93 so as to urge the valve body 93 toward the upper side in Fig. 6.

The valve body 93 is urged by the compression coil spring 101, thereby resulting in that the O-ring 97 of the valve body 93 abuts against a tapered stepped portion 102 of the stopper 91.

In this state, a leading end of the small-diameter shaft portion 95 of the valve body 93 is inserted in a hole 103 of the stopper 91.

Further, a positioning pin 115 protrudes from the lower end of the piston 58.

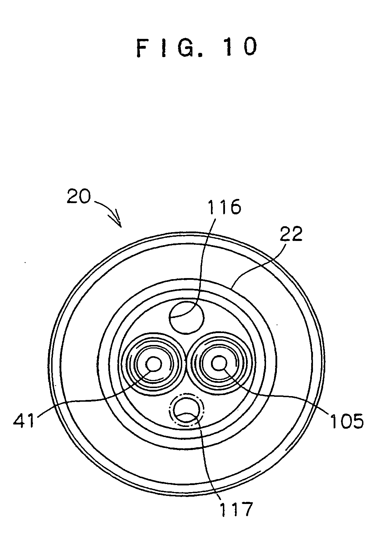

As shown in Fig. 10, formed at the upper end of the first hollow stem 22 of the valve 20 are a positioning hole 116 in which the above-described positioning pin 115 can be inserted, and a screw hole 117 in which the positioning pin 115 cannot be inserted.

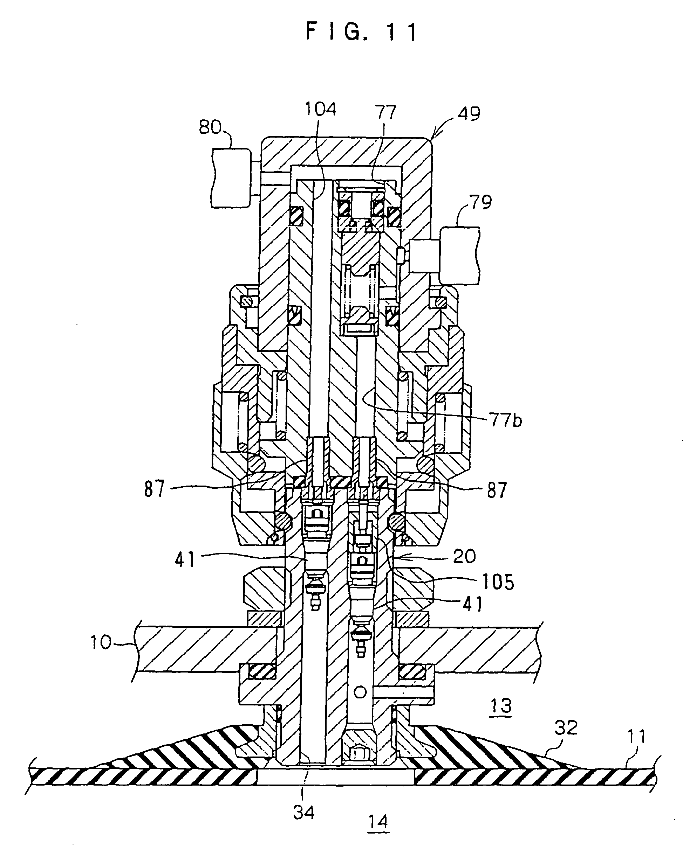

In this case, when the positioning pin 115 of the filling adapter 49 with a coupler is made to correspond to the positioning hole 116 of the valve 20, as shown in Fig. 11, the through hole 104 of the filling adapter 49 with a coupler necessarily corresponds to the hole 34 of the valve 20, and the small-diameter portion 77c of the through hole 77 of the filling adapter 49 with a coupler is adapted to correspond to the hole 35 of the valve 20.

### (Structure of a pressure-releasing adapter)

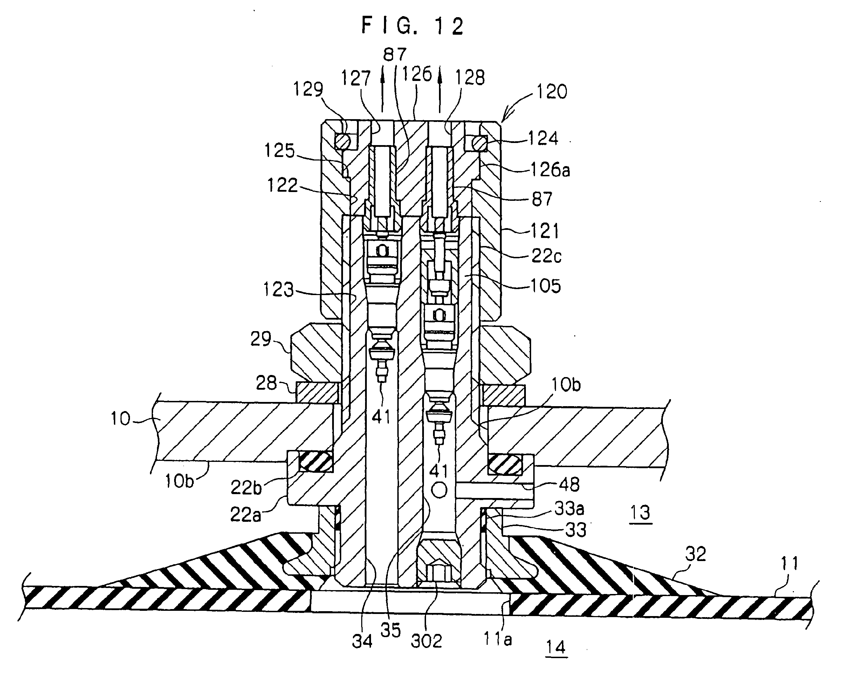

When gas is released from a tire using the valve 20 of the present embodiment, a special pressure-releasing adapter 120 shown in Fig. 12 is used.

As shown in Fig. 12, the pressure-releasing adapter 120 includes a cylindrical member 121 whose outer peripheral surface is subjected to crisscross-pattern knurling processing.

A female screw 123 is formed in a hole 122 of the cylindrical member 121 at the lower side portion thereof in Fig. 12. An annular groove 124 is formed at the upper side of the cylindrical member 121 in Fig. 12, and a stepped portion 125 is formed at the lower side of the groove 124 in Fig. 12.

The female screw 123 of the cylindrical member 121 can be engaged with the male screw 22c of the first hollow stem 22.

A lid member 126 is rotatably inserted in the hole 122 of the cylindrical member 121 at the upper side of Fig. 12.

The lid member 126 includes a flange 126a at an intermediate portion thereof, and also includes a through hole 127 and a through hole 128, which through holes are formed so as to extend through in the axial direction.

The valve-core pressing members 87 are screwed into the through holes 127 and 128, respectively, toward the lower side of Fig. 12.

A C-ring 129 is fitted in the groove 124 of the cylindrical member 121. The flange 126a of the lid member 126 is nipped between the C-ring 129 and the stepped portion 125, and the lid member 126 is held at a predetermined position in the hole 122 while it is being made rotatable relative to the cylindrical member 121.

### (Operation)

Next, the operation of the valve 20 of the present embodiment will be described.

First, a description will be given of the operation when gas is charged into the tire-rim assembly 8.

When gas is charged into the tire-rim assembly 8, the filling adapter 49 with a coupler is mounted at the valve 20.

When the filling adapter 49 with a coupler is mounted, the positioning pin 115 of the filling adapter 49 with a coupler is inserted in the positioning hole 116 of the valve 20. Thereafter, when the filling adapter 49 with a coupler is moved toward the valve 20, the piston 58 is pushed in and the hard ball 70 moves inward, and further, the slide ring 54 urged by the compression coil spring 63 moves toward the valve relative to the second cylindrical member 53.

As a result, the hard ball 68 is pushed inward by the slide ring 54 and slots into the groove 22d of the first hollow stem 22. In this way, the filling adapter 49 with a coupler is automatically locked on the valve 20.

In other words, the filling adapter 49 with a coupler according to the present embodiment can be mounted at the valve 20 by one action.

Here, the filling adapter 49 with a coupler according to the present embodiment can be mounted at the valve 20 by one action using two hard balls. However, as long as at least the hard ball 68 and the compression coil spring 63 are used, the filling adapter can be locked on the valve 20. In this case, it is necessary to carry out an operation of pulling the slide ring 54 when the filling adapter is mounted at the valve 20. This operation becomes a so-called one action.

When the end portion of the valve 20 is pushed into the second cylindrical member 53, the end of the first hollow stem 22 abuts against the packing 72 to push in the piston 58 of the filling adapter 49 with a coupler toward the inner side, and the compression coil spring 60 is compressed.

Further, the valve-core pressing member 87 of the filling adapter 49 with a coupler presses against the shaft 43 of the valve core 41, and therefore, flow of gas in the valve core 41 becomes possible.

Incidentally, in a state in which the filling adapter 49 with a coupler is locked on the valve 20, the packing 72 is compressed by urging force of the compression coil spring 60 and the sealing property improves.

Next, gas is charged by connecting an air-supply nozzle (not shown) to the second coupling 80.

In this case, the main body 51 at which the second coupling 80 is mounted is made rotatable in a manner relative to the piston 58. Therefore, the second coupling 80 is allowed to face in a desired direction so as to facilitate connection of the air-supply nozzle.

When the air-supply nozzle is connected to the second coupling 80, the shaft 43 of the valve core 41 is pressed so that flow of gas in the valve core 41 becomes possible.

A gas pressure of a compressor that feeds compressed gas to an air-supply nozzle is adjusted to 950 kPa (9.5 kg/cm²) in the present embodiment.

When gas is charged, the gas is supplied to the inner gas chamber 14 via the valve core 41 of the second coupling 80, the through hole 104 of the piston 58, and the valve-core pressing member 87, and further via the valve core 41 of the hole 34 of the valve 20.

When the pressure in an upper space portion between the upper side end portion of the piston 58 and the main body 51 increases, and force acting in a direction in which the valve body 93 is pushed in downward on the drawing (F1: (pressure in the upper space portion)×(cross sectional area of the small-diameter shaft portion 95 of the valve body 93)) becomes unbalanced with a resultant of urging force (F2) of the compression coil spring 101 toward the upper space portion (in the upward direction on the drawing), and force (F3) that causes the valve body 93 to move by pressure of the outer gas chamber 13 toward the upper space (in the upward direction on the drawing) (F3: (pressure in the outer gas chamber 13)×(cross sectional area of the small-diameter shaft portion 95 of the valve body 93)), that is to say, F2 + F3, so that the force (F1) becomes larger than the resultant force (F2 + F3), the valve body 93 moves toward the lower side of the drawing, and gas is charged into the outer gas chamber 13 via the intermediate-diameter portion 77b and the small-diameter portion 77c of the through hole 77 of the piston 58, and the valve-core pressing member 87.

In this way, the inner gas chamber 14 and the outer gas chamber 13 are both charged with gas.

When the pressure in the outer gas chamber 13 gradually increases, and the resultant (F2+F3) of the force (F3) that causes the valve body 93 to move toward the upper space (in the upward direction of the drawing), and the urging force (F2) of the compression coil spring 101 becomes larger than the force (F1) for pushing in the valve body 93 toward the lower side of the drawing, the valve body 93 is pushed toward the upper space and the O-ring 97 closely contacts the stepped portion 102.

In the present embodiment, first, gas of 50 kPa is charged into the inner gas chamber 14, and a differential pressure mechanism formed by the valve body 93, the compression coil spring 101 and the like operates. Gas is charged alternatively into the inner gas chamber 14 and the outer gas chamber 13 while maintaining the pressure difference of 50 kPa between the inner gas chamber 14 and the outer gas chamber 13, and charging for both of these gas chambers is completed substantially in simultaneous fashion (finally, the pressure of the outer gas chamber 13 becomes 900 kPa and the pressure of the inner gas chamber 14 becomes 950 kPa).

When the charging operation is completed, the air-supply nozzle is removed by an operator.

Incidentally, in the present embodiment, when gas is supplied by the second coupling 80 and flows into the upper space of the piston 58, the pressure of gas flowing into the upper space acts on the piston 58 so that the piston 58 is urged toward the valve 20, and the sealing property of the packing 72 is further improved by the compressive force.

Further, by the action of the differential pressure mechanism formed by the valve body 93, the compression coil spring 101 and the like, the force for urging the piston 58 toward the valve 20 is held without using the air-supply nozzle unless the filling adapter 49 with a coupler is removed, thereby making it possible to maintain a high sealing property.

In this way, when the valve 20 and the filling adapter 49 with a coupler according to the present embodiment are used, it is possible to charge gas both into the outer gas chamber 13 and into the inner gas chamber 14 without switching a valve unlike conventional ways, and also make a predetermined pressure difference between the outer gas chamber 13 and the inner gas chamber 14.

After charging is completed, the slide ring 54 of the filling adapter 49 with a coupler is pulled up by a finger holding operation, and the filling adapter 49 with a coupler is removed from the valve 20.

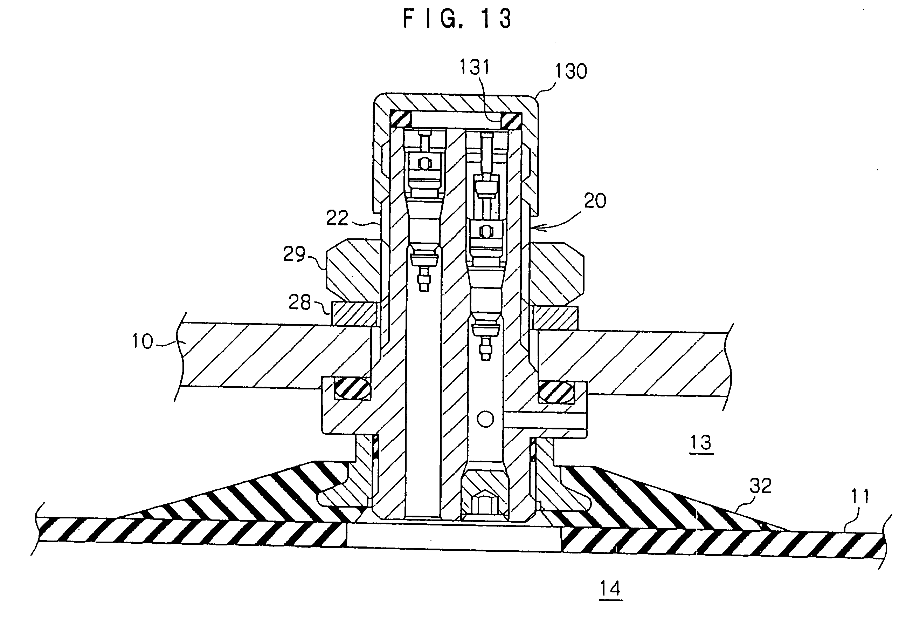

Finally, a valve cap 130 as shown in Fig. 13 is attached to the valve 20. 165 A packing 131 for closing the opening of the first hollow stem 22 is mounted at the inner side of the valve cap 130.

### (Gas pressure measuring method)

When the internal pressure of the outer gas chamber 13 (that is, a tire gas pressure) is checked, the filling adapter 49 with a coupler is mounted at the valve 20 and a pressure indicator is attached to the first coupling 79 for measurement of internal pressure.

### (Method for releasing gas from a tire (pressure-releasing method))

When gas is released from the outer gas chamber 13 and the inner gas chamber 14, as shown in Fig. 12, a pressure-releasing adapter 120 is attached to the valve 20.

As a result, the shaft 43 of the valve core 41 of the hole 34 is pressed by one of the valve-core pressing members 87. Therefore, gas in the inner gas chamber 14 is released to the atmosphere. Further, the slide shaft 107 of the detachment-restraining adaptor 105 of the hole 35 is pressed by the other valve-core pressing member 87, and the slide shaft 107 further presses against the shaft 43 of the valve core 41 of the hole 35. As a result, gas in the outer gas chamber 13 is released to the atmosphere.

Incidentally, when gas is released, it is preferable that the tube 11 is made not to inflate in a tire (relative to a state before gas is released).

Accordingly, when the pressure-releasing adapter 120 is mounted by screwing, it is necessary to set in advance the respective lower end positions of the valve-core pressing members 87 (and/or the upper end position of the shaft 43 of the valve core 41, or the upper end position of the slide shaft 107 of the detachment-restraining adapter 105) so that the valve core 41 at the side of the inner gas chamber 14 is first pressed, and thereafter, the slide shaft 107 of the detachment-restraining adapter 105 is pressed.

Incidentally, gas in the inner gas chamber 14 and gas in the outer gas chamber 13 may also be set so as to be released simultaneously. The internal pressure of the inner gas chamber 14 is higher than that of the outer gas chamber 13. Therefore, when gases in both gas chambers are released at the same time, gas in the inner gas chamber 14 having a high internal pressure is first released, and there is no possibility that the tube 11 inflates at the time of releasing gas.

### [Second Embodiment]

A second embodiment of the present invention will be hereinafter described based on the attached drawings. Note that the same structures as those of the first embodiment will be denoted by the same reference numerals, and a description thereof will be omitted.

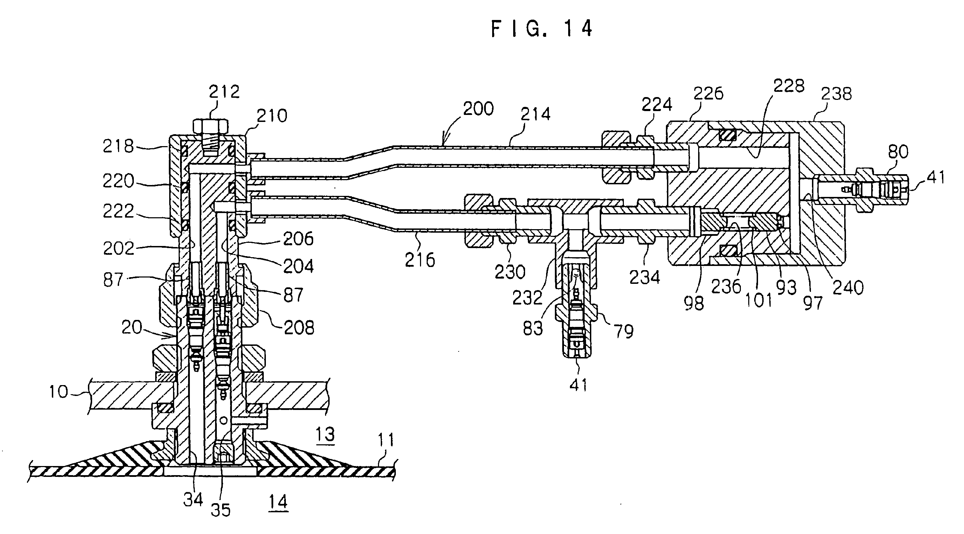

As shown in Fig. 14, a coupler 200 of this embodiment differs in the shape from the filling adapter 49 with a coupler according to the first embodiment.

As shown in Fig. 14, the coupler 200 of this embodiment includes a cylindrical member 206 equipped with a first gas passage 202 and a second gas passage 204.

A nut 208 for pressing one end of the cylindrical member 206 against the valve 20 is engaged with the cylindrical member 206 in a rotatable manner.

One end of the first gas passage 202 and one end of the second gas passage 204 are each opened to one end surface of the cylindrical member 206. The valve core pressing member 87 is mounted at each of the opening portions of these gas passages.

A cap 210 is mounted by a bolt 212 at the other end of the cylindrical member 206.

One end of a first pipe 214 connected to the first gas passage 202, and one end of a second pipe 216 connected to the second gas passage 204 are each connected to the cap 210.

O-rings 218, 220 and 222 are mounted on the outer periphery of the cylindrical member 206 in contact with the inner peripheral surface of the cap 210 so as to prevent gas from escaping from the first gas passage 202 and the second gas passage 204.

The first pipe 214 is connected to a through hole 228 of a cylindrical member 226 via a coupling 224.

The second pipe 216 is connected to a branch 232 via a coupling 230.

One end of a coupling 234 and the first coupling 79 used for measuring the internal pressure are connected to the branch 232.

The other end of the coupling 234 is connected to a through hole 236 of the cylindrical member 226.

A cap 238 is mounted at the cylindrical member 226 at the side thereof opposite to the side at which the coupling is disposed.

A though hole 240 is formed at the center of the cap 238, and the second coupling 80 for charging gas is connected to the through hole 240.

The valve body 93, the stopper 98, and the compression coil spring 101 are disposed in the through hole 236 of the cylindrical member 226.

### (Operation)

When gas is charged into the tire-rim assembly 8, the coupler 200 is mounted at the valve by the nut 208 as shown in Fig. 14.

As a result, the valve core pressing member 87 presses against the shaft 43 of the valve core 41 of the valve 20, and therefore, communication of gas through the valve core 41 becomes possible.

When gas is charged from the second coupling 80, the gas is supplied into the inner gas chamber 14 via the through hole 228, the first pipe 214 and the first gas passage 202.

When the pressure in a space portion between the end of the valve body 93 at the right side of Fig. 14, and the cap 238 becomes high, and force for pushing in the valve body 93 toward the left side of this drawing (F1: (pressure in the space portion)x(cross sectional area of the small-diameter shaft portion 95 of the valve body 93)) becomes unbalanced with a resultant of urging force (F2) of the compression coil spring 101 toward the space portion (toward the right side of this drawing), and force that causes the valve body 93 to move by pressure of the outer gas chamber 13 toward the space portion (in the upward direction of the drawing) (F3: (pressure in the outer gas chamber 13) × (cross sectional area of the small-diameter shaft portion 95 of the valve body 93)) (that is, F2 + F3), so that the force (F1) becomes larger than the resultant force (F2 + F3), the valve body 93 moves toward the left side of the drawing and gas is charged into the outer gas chamber 13 via the through hole 236, the second pipe 216, and the second gas passage 204.

In this way, the inner gas chamber 14 and the outer gas chamber 13 are both charged with gas.

When the pressure in the outer gas chamber 13 gradually increases, and the resultant of the urging force (F2) of the compression coil spring 101 and the force (F3) that causes the valve body 13 to move toward the space portion (toward the right side of the drawing) (that is, F2 + F3) becomes larger than the force (F1) that acts in a direction in which the valve body 93 is pushed in toward the left side of the drawing, the valve body 93 is pushed toward the space, and the O-ring 97 closely contacts a stepped portion (not shown) of the through hole 236.

In the present embodiment, first, gas of 50 kPa is charged into the inner gas chamber 14, and a differential pressure mechanism formed by the valve body 93, the compression coil spring 101 and the like operates. With the pressure difference of 50 kPa between the inner gas chamber 14 and the outer gas chamber 13 being maintained, the inner gas chamber 14 and the outer gas chamber 13 are alternately charged with gas, and charging of gas into both gas chambers is completed substantially in a simultaneous manner (finally, the pressure of the outer gas chamber 13 becomes 900 kPa and the pressure of the inner gas chamber 14 becomes 950 kPa).

When the charging is completed, an air-supply nozzle is removed by an operator.

As a result, in the same manner as in the first embodiment, the outer gas chamber 13 and the inner gas chamber 14 can be charged with gas and a predetermined pressure difference can be made between the outer gas chamber 13 and the inner gas chamber 14.

After the charging is completed, the coupler 200 is removed from the valve 20 by loosening the nut 208.

### (Gas pressure measuring method)

When the internal pressure of the outer gas chamber 13 (a so-called tire pneumatic pressure) is checked, the coupler 200 is mounted at the valve 20, and a pressure indicator is mounted at the first coupling 79 for measuring the internal pressure.

### [Third Embodiment]

A third embodiment of the present invention will be hereinafter described based on the attached drawings. Note that the same structures as those of the first embodiment will be denoted by the same reference numerals, and a description thereof will be omitted.

This embodiment is a modified example of the valve 20 of the first embodiment.

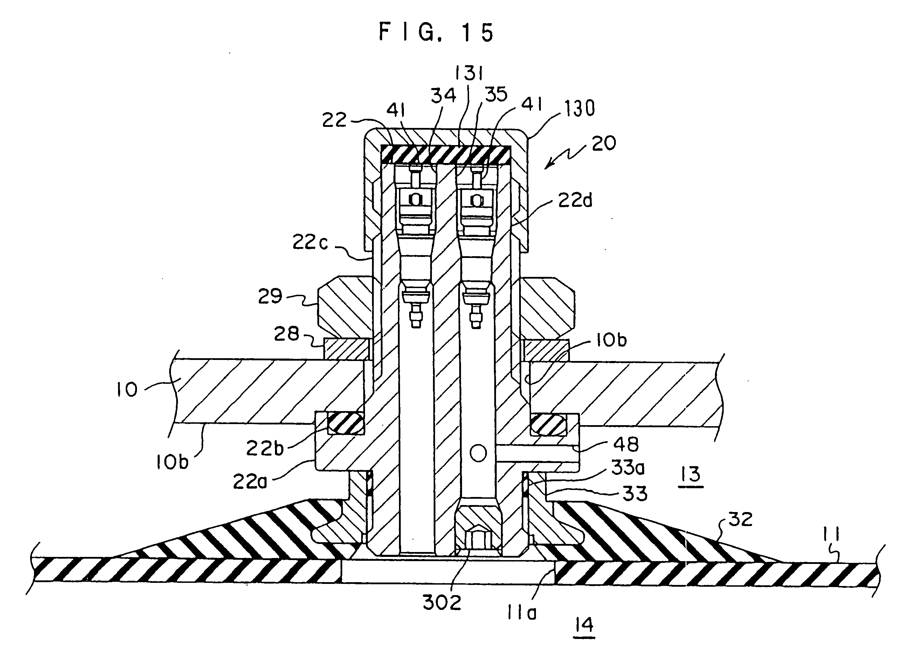

As shown in Fig. 15, in the valve 20 of this embodiment, the detachment-restraining adaptor 105 used in the first embodiment is not provided, and the valve core 41 of the hole 34 and the valve core 41 of the hole 35 are arranged along the axial direction at the same level.

Accordingly, when gas is released by using the pressure-releasing adaptor 120 in the same manner as in the first embodiment, the shaft 43 of the valve core 41 in the hole 34 and the shaft 43 of the valve core 41 in the hole 35 are pressed at the same time, and gas in the inner gas chamber 14 and gas in the outer gas chamber 13 are released at the same time.

Incidentally, when gas in the inner gas chamber 14 and gas in the outer gas chamber 13 are released without using the pressure releasing adapter 102, it is necessary that the valve core 41 of the hole 34 and the valve core 41 of the hole 35 are removed at the same timing, or that the valve core 41 of the hole 34 corresponding to the inner gas chamber 14 is removed in advance of the valve core 41 of the hole 35 corresponding to the outer gas chamber 13.

In the example shown in Fig. 15, the valve core 41 of the hole 34 and the valve core 41 of the hole 35 are arranged along the axial direction at the same level. However, the valve core 41 of the hole 34 may be displaced further upward than the valve core 41 of the hole 35 so that gas in the inner gas chamber 14 is released in advance.

### [Other Embodiments]

In the above-described embodiments, when gas is removed from a tire, a special pressure-releasing adapter 120 shown in Fig. 12 is used. However, gas can be released by removing the detachment-restraining adapter 105 and the valve core 41.

In this case, it is necessary that the valve core 41 of the hole 34 corresponding to the inner gas chamber 14 is removed first so that the tube 11 does not inflate.

In this embodiment, the valve core 41 of the hole 35 is disposed further at the inner side of the hole 35 than the detachment-restraining adapter 105. Therefore, when visually observed by an operator, it is sensorily understood that the valve core 41 of the hole 34 corresponding to the inner gas chamber 14 must be removed in advance, and an effect of preventing the valve core 41 of the hole 35 from being first removed accidentally is obtained.

A C-ring or the like may also be used in place of the detachment-restraining adapter 105, and the above-described effect can also be obtained by using a C-ring or the like.

Further, in the present embodiments, air is charged into the outer gas chamber 13 and the inner gas chamber 14. However, the present invention is not limited to the same, and gas other than air, for example, nitrogen gas may be charged into the outer gas chamber 13 and the inner gas chamber 14.

### INDUSTRIAL APPLICABILITY

As described above, the valve for a safety tire according to the present invention is suitably used in a tire having a double structure, and is also suitable for a case in which gas is charged into an outer gas chamber and an inner gas chamber, which gas chambers are provided in the tire.

The filling adapter with a coupler according to the present invention is suitably used in a tire having a double structure equipped with a valve for a safety tire, and is also suitable for a case in which gas is charged from the valve for a safety tire into an outer gas chamber and an inner gas chamber.

The pressure releasing adapter according to the present invention is suitably used in a tire having a double structure equipped with a valve for a safety tire, and is also suitable for a case in which gas charged both in an outer gas chamber and in an inner gas chamber is released to the atmosphere.

Further, the pressure releasing method according to the present invention is suitably used in a tire having a double structure, and is also suitably used in a case in which gas charged both in an outer gas chamber and in an inner gas chamber is released to the atmosphere.

### Description of reference numerals

8: tire-rim assembly
10: rim
11: air pocket (tube)
12: tire
13: outer gas chamber
14: inner gas chamber
20: valve (valve for a safety tire)
34: hole (air-supply passage for an inner gas chamber)
35: hole (air-supply passage for an outer gas chamber)
41: valve core (nonreturn valve member for an inner gas chamber, nonreturn valve member for an outer gas chamber)
49: filling adapter with a coupler
87: valve-core pressing member (operating means, first convex portion, second convex portion)
116: positioning hole (engaging portion)
120: pressure releasing adapter

## Claims

1. A valve (20) for a safety tire, equipped with a charging opening for charging gas into an outer gas chamber (13) and an inner gas chamber (14), which are provided in a tire having a double structure, said valve for a safety tire comprising:
an air-supply passage (34) for the inner gas chamber (14), which causes the charging opening and the inner gas chamber to communicate with each other;
an air-supply passage (35) for the outer gas chamber (13), which causes the charging opening and the outer gas chamber to communicate with each other;
a nonreturn valve member (41) for the inner gas chamber, provided in said air-supply passage (34) for the inner gas chamber (14), said nonreturn valve member for the inner gas chamber allowing gas to flow from the atmospheric side into the gas chamber and making it possible to prevent gas from flowing from the gas chamber into the atmosphere, and also allowing gas to flow from the gas chamber into the atmosphere by carrying out a predetermined operation;
a nonreturn valve member (41) for the outer gas chamber, provided in said air-supply passage (35) for the outer gas chamber (13), said nonreturn valve member for the outer gas chamber allowing gas to flow from the atmospheric side into the gas chamber and making it possible to prevent gas from flowing from the gas chamber into the atmosphere, and also allowing gas to flow from the gas chamber into the atmosphere by carrying out a predetermined operation; and
an engaging portion (116) that allows a filling adapter (49) with a coupler to be mounted at the charging opening in only a fixed direction, which filling adapter includes a first passage that can supply gas to the inner gas chamber (14) by communicating with said air-supply passage (34) for the inner gas chamber, and includes a second passage that can supply gas to the outer gas chamber (13) by communicating with said air-supply passage (35) for the outer gas chamber so as to make a pressure difference between the outer gas chamber and the inner gas chamber, the engaging portion (116) allowing the filling adapter (49) to be mounted so that said air-supply passage (34) for the inner gas chamber communicates with the first passage and said air-supply passage (35) for the outer gas chamber communicates with the second passage;
wherein detachment-restraining means (105) for restraining-detachment of said nonreturn valve member (41) for the outer gas chamber (13) is provided in said air-supply passage (35) for the outer gas chamber at a position nearer to the charging opening than said nonreturn valve member for the outer gas chamber.

2. A pressure releasing adapter (120) for releasing, to the atmosphere, gas in an inner gas chamber (14) and gas in an outer gas chamber (13) of a of a safety tire-rim assembly equipped with a pneumatic tire, an expandable air pocket disposed within the pneumatic tire and forming the inner gas chamber, a rim (10) that forms the outer gas chamber between the pneumatic tire and the air pocket when the pneumatic tire and the air pocket are mounted, and the valve (20) for a safety tire according to claim 1, the pressure releasing adapter including operating means (87) which operates a nonreturn valve member (41) for the inner gas chamber (14) in advance of a nonreturn valve member (41) for the outer gas chamber (13),
wherein gas in the inner gas chamber and gas in the outer gas chamber are released to the atmosphere due to the pressure releasing adapter engaging with said valve for a safety tire.

3. A pressure releasing adapter as claimed in claim 2, wherein said operating means (87) includes a first protruding portion for operating said nonreturn valve member (41) for the inner gas chamber (14), and a second protruding portion for operating said nonreturn valve member (41) for the outer gas chamber (13), and said first protruding portion is longer than said second protruding portion.

## Patentansprüche

1. Ventil (20) für einen Sicherheitsreifen, das ausgerüstet ist mit einer Füllöffnung zum Füllen von Gas in eine äußere Gaskammer (13) und eine innere Gaskammer (14), welche in dem Reifen mit einer Doppelstruktur bereitgestellt sind, wobei das Ventil für einen Sicherheitsreifen umfasst:
eine Luftversorgungspassage (34) für die innere Gaskammer (14), welche eine Kommunikation zwischen der Füllöffnung und der inneren Gaskammer verursacht;
eine Luftversorgungspassage (35) für die äußere Gaskammer (13), welche eine Kommunikation zwischen der Füllöffnung und der äußeren Gaskammer verursacht;
ein Rückschlagventil-Bauteil (41) für die innere Gaskammer, das in der Luftversorgungspassage (34) für die innere Gaskammer (14) bereitgestellt ist, wobei das Rückschlagventil-Bauteil für die innere Gaskammer einem Gas erlaubt, von der atmosphärischen Seite in die Gaskammer zu fließen, und es möglich macht zu verhindern, dass Gas von der Gaskammer in die Atmosphäre fließt, und ebenso Gas erlaubt, von der Gaskammer in die Atmosphäre zu fließen durch Ausführung eines zuvor festgelegten Betriebs;
das Rückschlagventil-Bauteil (41) für die äußere Gaskammer ist in der Luftversorgungspassage (35) für die äußere Gaskammer (13) bereitgestellt,
wobei das Rückschlagventil-Bauteil für die äußere Gaskammer einem Gas erlaubt, von der atmosphärischen Seite in die Gaskammer zu fließen, und es möglich macht zu verhindern, dass Gas von der Gaskammer in die Atmosphäre fließt, und es ebenso erlaubt, dass Gas von der Gaskammer in die Atmosphäre fließt durch Durchführung eines zuvor festgelegten Betriebs; und
einen eingreifenden Abschnitt (116), der einem Fülladapter (49) mit einer Kupplung erlaubt, an der Füllöffnung nur in einer fixierten Richtung befestigt zu sein, wobei der Fülladapter eine erste Passage einschließt, die Gas in die innere Gaskammer (14) liefern kann durch Kommunikation mit der Luftversorgungspassage (34) für die innere Gaskammer, und eine zweite Passage einschließt, die Gas in die äußere Gaskammer (13) liefern kann durch Kommunikation mit der Luftversorgungspassage (35) für die äußere Gaskammer, um einen Druckunterschied zwischen der äußeren Gaskammer und der inneren Gaskammer zu erzeugen, wobei der eingreifende Abschnitt (116) dem Fülladapter (49) erlaubt, so befestigt zu werden, dass die Luftversorgungspassage (34) für die innere Gaskammer mit der ersten Passage kommuniziert und die Luftversorgungspassage (35) für die äußere Gaskammer mit der zweiten Passage kommuniziert;
wobei Abtrennung verhindernde Mittel (105) zum Verhindern einer Abtrennung des Rückschlagventil-Bauteils (41) für die äußere Gaskammer (13) bereitgestellt ist in der Luftversorgungspassage (35) für die äußere Gaskammer in einer Position näher zu der Füllöffnung als zum Rückschlagventil-Bauteil für die äußere Gaskammer.

2. Druckablassadapter (120) zum Ablassen von Gas in die Atmosphäre in einer inneren Gaskammer (14) und Gas in einer äußeren Gaskammer (13) einer Sicherheitsreifen-Felgenanordnung, die ausgestattet ist mit einem pneumatischen Reifen, und einer ausdehnbaren Lufttasche, die innerhalb des pneumatischen Reifens angeordnet ist und die innere Gaskammer bildet, und einer Felge (10), die die äußere Gaskammer zwischen dem pneumatischen Reifen und der Lufttasche bildet, wenn der pneumatische Reifen und die Lufttasche befestigt sind, und das Ventil (20) für einen Sicherheitsreifen nach Anspruch 1, wobei der Druckablassadapter Betriebsmittel (87) einschließt, welche ein Rückschlagventil-Bauteil (41) für die innere Gaskammer (14) in Vorlauf von einem Rückschlagventil-Bauteil (41) für die äußere Gaskammer (13) betreiben, wobei ein Gas in der inneren Gaskammer und ein Gas in der äußeren Gaskammer an die Atmosphäre abgelassen wird aufgrund des Druckablassadapters, der in das Ventil für einen Sicherheitsreifen eingreift.

3. Druckablassadapter nach Anspruch 2, bei dem die Betriebsmittel (87) einen ersten vorstehenden Abschnitt zum Betreiben des Rückschlagventil-Bauteils (41) für die innere Gaskammer (14) einschließt, und einen zweiten vorstehenden Abschnitt zum Betreiben des Rückschlagventil-Bauteils (41) für die äußere Gaskammer (13), und der erste vorstehende Abschnitt länger als der zweite vorstehende Abschnitt ist.

## Revendications

1. Valve (20) pour un pneumatique de sécurité, équipée d'une ouverture de chargement permettant de charger un gaz dans une chambre extérieure (13) de gaz et dans une chambre intérieure (14) de gaz, qui sont réalisées dans un pneumatique ayant une double structure, ladite valve pour pneumatique de sécurité comprenant :
un passage (34) d'alimentation en air destiné à la chambre intérieure (14) de gaz, lequel amène l'ouverture de chargement et la chambre intérieure de gaz à communiquer l'une avec l'autre ;
un passage (35) d'alimentation en air destiné à la chambre extérieure (13) de gaz, lequel amène l'ouverture de chargement et la chambre extérieure de gaz à communiquer l'une avec l'autre ;
un élément antiretour (41) de valve destiné à la chambre intérieure de gaz, réalisé dans ledit passage (34) d'alimentation en air prévu pour la chambre intérieure (14) de gaz, ledit élément antiretour de valve destiné à la chambre intérieure de gaz permettant l'écoulement d'un gaz du côté atmosphérique dans la chambre de gaz et rendant possible le fait d'empêcher un écoulement de gaz de la chambre de gaz vers l'atmosphère, et permettant également un écoulement de gaz de la chambre de gaz vers l'atmosphère par une exécution d'une opération prédéterminée ;
un élément antiretour (41) de valve destiné à la chambre extérieure de gaz, réalisé dans ledit passage (35) d'alimentation en air prévu pour la chambre extérieure (13) de gaz, ledit élément antiretour de valve destiné à la chambre extérieure de gaz permettant un écoulement de gaz du côté atmosphérique dans la chambre de gaz et rendant possible le fait d'empêcher un écoulement de gaz de la chambre de gaz vers l'atmosphère, et permettant également un écoulement de gaz de la chambre de gaz vers l'atmosphère par une exécution d'une opération prédéterminée ; et
une partie (116) d'engagement qui permet de monter un adaptateur (49) de remplissage doté d'un dispositif d'accouplement au niveau de l'ouverture de chargement dans une seule direction fixe, lequel adaptateur de remplissage inclut un premier passage qui permet une délivrance de gaz à la chambre intérieure (14) de gaz par communication avec ledit passage (34) d'alimentation en air destiné à la chambre intérieure de gaz, et inclut un second passage qui peut délivrer du gaz à la chambre extérieure (13) de gaz par communication avec ledit passage (35) d'alimentation en air destiné à la chambre extérieure de gaz de façon à établir une différence de pression entre la chambre extérieure de gaz et la chambre intérieure de gaz, la partie (116) d'engagement permettant de monter l'adaptateur (49) de remplissage de sorte que ledit passage (34) d'alimentation en air destiné à la chambre intérieure de gaz communique avec le premier passage et que ledit passage (35) d'alimentation en air destiné à la chambre extérieure de gaz communique avec le second passage ;
dans laquelle un moyen (105) de désolidarisation - retenue permettant de retenir - désolidariser ledit élément antiretour (41) de valve prévu pour la chambre extérieure (13) de gaz est disposé dans ledit passage (35) d'alimentation en air destiné à la chambre extérieure de gaz à une position plus proche de l'ouverture de chargement que celle dudit élément antiretour de valve prévu pour la chambre extérieure de gaz.

2. Adaptateur (120) de libération de pression permettant de libérer, vers l'atmosphère, un gaz qui se trouve dans une chambre intérieure (14) de gaz et un gaz qui se trouve dans une chambre extérieure (13) de gaz d'un ensemble de pneumatique - jante de sécurité équipé d'un pneumatique, d'une poche d'air dilatable disposée à l'intérieur du pneumatique et formant la chambre intérieure de gaz, d'une jante (10) qui forme la chambre extérieure de gaz entre le pneumatique et la poche d'air lorsque le pneumatique et la poche d'air sont montés, et de la valve (20) prévue pour un pneumatique de sécurité selon la revendication 1, l'adaptateur de libération de pression incluant un moyen (87) d'actionnement qui actionne un élément antiretour (41) de valve prévu pour la chambre intérieure (14) de gaz de manière anticipée par rapport à un élément antiretour (41) de valve prévu pour la chambre extérieure (13) de gaz, dans lequel un gaz qui se trouve dans la chambre intérieure de gaz et un gaz qui se trouve dans la chambre extérieure de gaz sont libérés vers l'atmosphère du fait que l'adaptateur de libération de pression engage avec ladite valve prévue pour un pneumatique de sécurité.

3. Adaptateur de libération de pression selon la revendication 2, dans lequel ledit moyen (87) d'actionnement inclut une première partie en saillie destinée à actionner ledit élément antiretour (41) de valve prévu pour la chambre intérieure (14) de gaz, et une seconde partie en saillie destinée à actionner ledit élément antiretour (41) de valve prévu pour la chambre extérieure (13) de valve, et dans lequel ladite première partie en saillie est plus longue que ladite seconde partie en saillie.
